# EUROPÄISCHE PATENTSCHRIFT

(11) **EP 0 852 842 B1**
(45) Veröffentlichungstag und Bekanntmachung des Hinweises auf die Patenterteilung: **26.04.2000**
(21) Anmeldenummer: 96934426.6
(22) Anmeldetag: 17.09.1996
(51) Int. Cl.: H02M 7/48

(54) **VERLUSTARMER LEISTUNGS-WECHSELRICHTER**
LOW-LOSS POWER CURRENT INVERTER
ONDULEUR DE PUISSANCE A FAIBLES PERTES

(30) Priorität: 29.09.1995 DE 19536470
(43) Veröffentlichungstag der Anmeldung: 15.07.1998
(73) Patentinhaber: SIEMENS AKTIENGESELLSCHAFT, 80333 München (DE)
(72) Erfinder: BRUCKMANN, Manfred, D-90475 Nürnberg (DE); MERTENS, Axel, D-91083 Baiersdorf (DE)
(86) Internationale Anmeldenummer: DE9601754
(87) Internationale Veröffentlichungsnummer: WO9713315

(56) Entgegenhaltungen:
- EP-A- 0 727 870
- PROCEEDINGS OF THE ANNUAL POWER ELECTRONICS SPECIALISTS CONFERENCE (PESC), SEATTLE, JUNE 20 - 25, 1993, Nr. CONF. 24, 20.Juni 1993, INSTITUTE OF ELECTRICAL AND ELECTRONICS ENGINEERS, Seiten 880-884, XP000399530 YI W ET AL: "NOVEL SNUBBERLESS THREE-LEVEL GTO INVERTER WITH DUAL QUASI-RESONANT DC-LINK"
- PROCEEDINGS OF THE ANNUAL POWER ELECTRONICS SPECIALISTS CONFERENCE (PESC), SEATTLE, JUNE 20 - 25, 1993, Nr. CONF. 24, 20.Juni 1993, INSTITUTE OF ELECTRICAL AND ELECTRONICS ENGINEERS, Seiten 171-177, XP000399444 J RENES PINHEIRO ET AL: "WIDE LOAD RANGE THREE-LEVEL ZVS-PWM DC-TO-DC CONVERTER"

## Beschreibung

Die Erfindung bezieht sich auf einen verlustarmer Leistungs-Wechselrichter.

Seit einigen Jahren werden Resonanzstromrichter für die Antriebstechnik als Alternative zum herkömmlichen spannungseinprägenden Pulswechselrichter propagiert. Sie haben zum Ziel, die Schaltverluste drastisch zu reduzieren und die daraus folgenden Vorteile - höhere Leistungsdichte, höhere Schaltfrequenz - optimal zu nutzen. Darüber hinaus können die Halbleiter aufgrund der geringen Belastung während der Schaltvorgänge höhere Ströme schalten und damit noch höher ausgelastet werden.

Als Nachteile entstehen zum Teil erhebliche Mehraufwendungen für aktive und passive Komponenten, die zusätzlich eingefügt werden müssen, um Strom- und Spannungsverläufe während der Schaltvorgänge entsprechend zu formen. Teils entstehen höhere Spitzenströme und -spannungen an den Schaltelementen. Zusätzlich müssen in einigen Resonanzstromrichtern völlig andere Steuerverfahren eingesetzt werden als bisher.

Eine Variante, die im Vergleich mit anderen Schaltungen nur geringfügige Einschränkungen aufweist, wird als **A**uxiliary-**R**esonant-**C**ommutated-**P**ole-(ARCP-)Wechselrichter bezeichnet. In einem ARCP-Wechselrichter treten keine höheren Spitzenbelastungen der Schaltelemente auf als in einem Pulswechselrichter und die bekannten Steuerverfahren können eingesetzt werden und müssen nur hinsichtlich der Totzeiten und Mindestimpulsdauern angepaßt werden. Der Mehraufwand an Bauelementen und Steuerungselektronik ist moderat und muß im Verhältnis zu den erzielbaren Vorteilen, gegebenenfalls auch im Vergleich mit herkömmlichen Entlastungsnetzwerken, betrachtet werden.

Die Funktionsweise eines ARCP-Umrichters ist aus dem Aufsatz "The Auxiliary Resonant Commutated Pole Converter" von R.W. De Doncker und J.P. Lyons, abgedruckt in IEEE-IAS Conference Proceedings 1990, Seiten 1228 bis 1235, bekannt. Bei einem solchen ARCP-Umrichter ist jedem Leistungshalbleiterschalter ein Resonanz-Kondensator elektrisch parallel geschaltet. Außerdem ist eine Hilfsschaltung, bestehend aus einem Hilfsschalter, der elektrisch in Reihe mit einer Resonanz-Induktivität geschaltet ist, vorgesehen, der einen Mittelpunkt eines Gleichspannungs-Zwischenkreis-Kondensators mit einem Ausgangsanschluß der Umrichterphase verbindet. Als Hilfsschalter sind zwei Halbleiterschalter mit antiparallelen Dioden vorgesehen, die derart elektrisch in Reihe geschaltet sind, daß deren Kathoden- bzw. Emitter- bzw. Source-Anschlüsse miteinander verbunden sind. Als Halbleiterschalter können SCRs (symmetrisch sperrender Thyristor), GTOs (**G**ate-**T**urn-**O**ff-**T**hyristor), ZTOs oder MCTs (**M**OS-**C**ontrolled **T**hyristor) verwendet werden. Als Leistungshalbleiterschalter können beispielsweise GTOs (**G**ate-**T**urn-**O**ff-**T**hyristor), MCTs (**M**OS-**C**ontrolled **T**hyristor) , IGBTs (**I**nsulated **G**ate **B**ipolar **T**ransistor) oder LTRs (**L**eistungstransistor) vorgesehen sein.

Sollen mit selbstgeführten Stromrichtern Drehstromverbraucher größerer Leistung, z.B. Drehstrommaschinen im MW-Bereich, gespeist werden, so besteht die Forderung nach Leiterspannungen im Hochspannungsbereich. Um diese zu erfüllen, müssen beim heutigen Stand der Halbleitertechnik gegebenenfalls Halbleiterbauelemente in Reihe geschaltet werden.

Im Aufsatz mit dem Titel "Series Connection of IGBTs in Resonant Converters" von M. Dehmlow, K. Heumann, H. Jörgensen und G. Spieß, abgedruckt in IPEC-Yokohama'95, Seiten 1634 bis 1638, wird ein Resonanzstromrichter gezeigt, dessen Brückenzweigventile jeweils aus einer Reihenschaltung von drei IGBTs bestehen. Jeder Leistungsschalter ist mit einem Resonanz-Kondensator versehen.

Eine günstige Möglichkeit der Reihenschaltung von zwei Bauelementen je Brückenzweig bietet die erweiterte Drehstrom-Brückenschaltung. Bei ihr kann die Spannung der Wechselstromklemmen gegenüber der Klemme 0 die drei Werte +U_{d}/2, Null und -U_{d}/2 annehmen. Sie wird daher auch selbstgeführter Dreipunktstromrichter oder Dreipunkt-Wechselrichter genannt.

Der Erfindung liegt nun die Aufgabe zugrunde, einen Leistungs-Wechselrichter anzugeben, dessen Leistungshalbleiterschalter verlustarm schalten sollen.

Diese Aufgabe wird erfindungsgemäß dadurch gelöst, daß ein Leistungs-Wechselrichter gemäß den Merkmalen des Anspruchs 1 vorgesehen ist.

Dadurch, daß pro Wechselrichterphase, die jeweils elektrisch parallel zu einem aus einer Reihenschaltung zweier Kondensatoren bestehenden Gleichspannungs-Zwischenkreis geschaltet ist, eine obere und untere Brückenhälfte jeweils zwei Leistungshalbleiterschalter aufweist, deren Verbindungspunkte jeweils mittels einer Entkopplungsdiode mit dem Verbindungspunkt der beiden Kondensatoren des Gleichspannungs-Zwischenkreises verknüpft sind, erhält man den Aufbau einer Dreipunkt-Wechselrichterphase. Diese Dreipunkt-Wechselrichterphase wird mit weiteren Komponenten versehen. Diese weiteren Komponenten sind eine Hilfsschaltung und für die Leistungshalbleiterschalter der Wechselrichterphase wenigstens einen Resonanz-Kondensator. Die Hilfsschaltung besteht aus jeweils einem Hilfsschalter für die obere und die untere Brückenhälfte der Wechselrichterphase, die elektrisch in Reihe mit einer Resonanz-Induktivität verbunden ist. Diese Hilfsschaltung verbindet einen Ausgangs-Anschluß der Wechselrichterphase mit jeweils einem Mittenanschluß der beiden Kondensatoren des Gleichspannungs-Zwischenkreises. Dabei ist jeweils ein Anschluß eines Hilfsschalters mit einem Mittenanschluß eines Kondensators des Gleichspannungs-Zwischenkreises und ein Anschluß der Resonanz-Induktivität mit dem Ausgangs-Anschluß der Wechselrichterphase verbunden.

Mittels dieser Hilfsschalter kann die Schwingkreisbeschaltung (Resonanz-Induktivität und wenigstens ein Resonanz-Kondensator) zu- bzw. abgeschaltet werden. Damit ist es möglich, den Schaltaugenblick der Leistungshalbleiterschalter der Wechselrichterphase festzulegen, wodurch herkömmliche Pulsweitenmodulations-Verfahren eingesetzt werden können. Dadurch können die Leistungshalbleiter dieser Wechselrichterphase bei verschwindender Spannung über diesen Bauelementen einschalten und abschalten (Zero-Voltage-Switch-(ZVS)-Prinzip). Die Hilfsschalter dieser Hilfsschaltung werden nach dem Zero-Current-Switch-(ZCS-) Prinzip ebenfalls schaltentlastend betrieben. Beim ZCS-Prinzip wird der Hilfsschalter bei verschwindendem Strom ein- und abgeschaltet. Das heißt, die in dieser Wechselrichterphase verwendeten Halbleiterschalter schalten verlustarm.

Somit erhält man als verlustarmen Leistungs-Wechselrichter gemäß dem Merkmal des Anspruchs 1 einen Dreipunkt-ARCP-Wechselrichter, der die Vorteile eines Dreipunkt-Wechselrichters mit denen eines ARCP-Wechselrichters kombiniert, wobei wenigstens nur ein Resonanz-Kondensator benötigt wird.

Bei einer vorteilhaften Ausführungsform einer Wechselrichterphase des verlustarmen Leistungs-Wechselrichters sind anstelle einer Resonanz-Induktivität in der Hilfsschaltung zwei Resonanz-Induktivitäten vorgesehen, die jeweils mit einem Hilfsschalter elektrisch in Reihe geschaltet sind.

Weitere vorteilhafte Ausführungsformen der Wechselrichterphase des verlustarmen Leistungs-Wechselrichters sind den Unteransprüchen 3 bis 12 zu entnehmen.

Zur weiteren Erläuterung der Erfindung wird auf die Zeichnung Bezug genommen, in der Ausführungsbeispiele einer Wechselrichterphase eines verlustarmen Leistungs-Wechselrichters schematisch veranschaulicht sind.
- Figur 1: zeigt eine erste Ausführungsform der Wechselrichterphase eines erfindungsgemäßen verlustarmen Leistungs-Wechselrichters,
- Figur 2: zeigt eine vorteilhafte Ausführungsform dieser Wechselrichterphase, die
- Figuren 3 bis 5: zeigen jeweils weitere Ausführungsformen der Wechselrichterphase, die
- Figur 6: zeigt eine Ausführungsform der Wechselrichterphase, die die Ausführungsformen gemäß der Figuren 1 und 3 kombiniert, in
- Figur 7: ist eine Ausführungsform, bestehend aus den Ausführungsformen der Figuren 3 und 4, und in
- Figur 8: ist eine Ausführungsform der Wechselrichterphase dargestellt, die die Ausführungsformen gemäß den Figuren 1, 3 und 4 kombiniert.

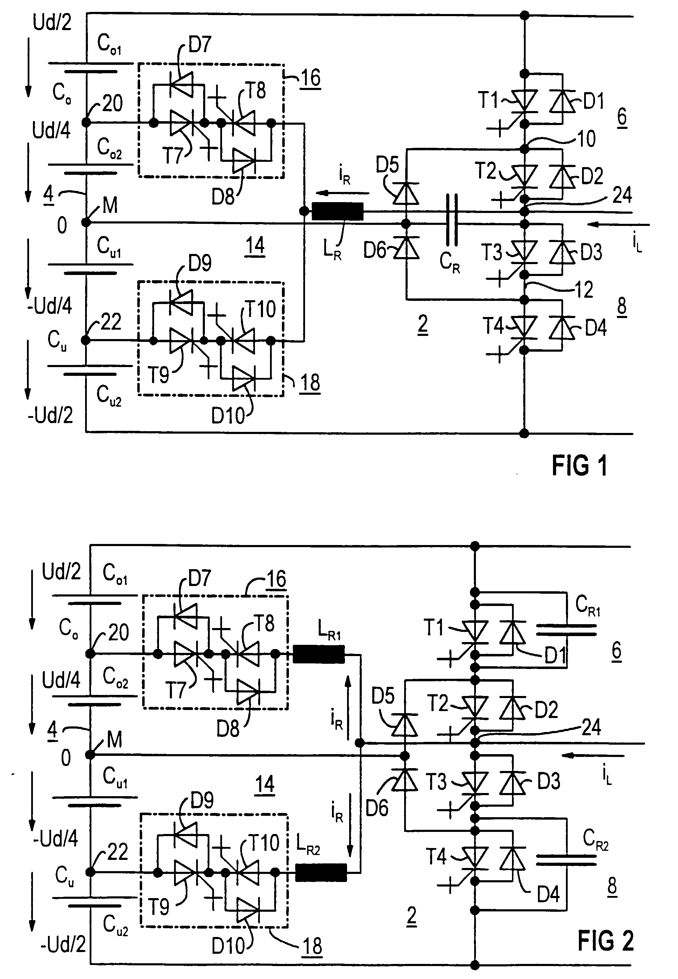

Die Figur 1 zeigt den Aufbau einer Wechselrichterphase 2 eines verlustarmen Leistungs-Wechselrichters, wobei diese Wechselrichterphase 2 elektrisch parallel zu einem Gleichspannungs-Zwischenkreis 4 geschaltet ist. Die Wechselrichterphase 2 weist eine obere und eine untere Brückenhälfte 6 und 8 auf, die jeweils zwei Leistungshalbleiterschalter T1, T2 und T3, T4 mit antiparallel geschalteten Dioden D1,D2 und D3, D4 enthält. Der Verbindungspunkt 10 bzw. 12 der Leistungshalbleiterschalter T1 und T2 bzw. T3 und T4 ist mittels einer Entkoppelungsdiode D5 bzw. D6 mit einem Verbindungspunkt M der beiden Kondensatoren Cₒ und Cᵤ des Gleichspannungs-Zwischenkreises 4 verbunden.

Der Kondensator Cₒ bzw. Cᵤ des Gleichspannungs-Zwischenkreises 4 ist in zwei gleich große Kondensatoren Cₒ₁ und Cₒ₂ bzw. Cᵤ₁ und Cᵤ₂ aufgeteilt, deren Kapazitätswerte jeweils doppelt so groß sind wie der Kapazitätswert des Kondensators Cₒ bzw. Cᵤ des Gleichspannungs-Zwischenkreises 4. Als Kondensator Cₒ bzw. Cᵤ des Gleichspannungs-Zwischenkreises 4 kann auch ein Kondensator mit Mittenabgriff vorgesehen sein.

Außerdem weist diese Wechselrichterphase 2 eine Hilfsschaltung 14 auf, die aus einem oberen und einem unteren Hilfsschalter 16 und 18 und einer Resonanz-Induktivität L_{R} besteht. Diese beiden Hilfsschalter 16 und 18 sind mit der Resonanz-Induktivität L_{R} elektrisch in Reihe geschaltet. Der Hilfsschalter 16 bzw. 18 besteht aus zwei Halbleiterschaltern T7 und T8 bzw. T9 und T10 mit antiparallel geschalteten Dioden D7 und D8 bzw. D9 und D10. Mittels dieses Hilfsschalters 16 bzw. 18 kann ein Verbindungspunkt 20 bzw. 22 der Kondensatoren Cₒ₁ und Cₒ₂ bzw. Cᵤ₁ und Cᵤ₂ über die Resonanz-Induktivität L_{R} mit einem Ausgangs-Anschluß 24 der Wechselrichterphase 2 verbunden werden.

Ferner ist wenigstens ein Resonanz-Kondensator C_{R} für die Leistungshalbleiterschalter T1,...,T4 der Wechselrichterphase 2 vorgesehen, der zwischen dem Ausgangs-Anschluß 24 der Wechselrichterphase 2 und dem Verbindungspunkt M des Gleichspannungs-Zwischenkreises 4 angeschlossen ist.

Als Leistungshalbleiterschalter T1,...,T4 der Wechselrichterphase 2 sind abschaltbare Leistungshalbleiterschalter, beispielsweise GTOs, MCTs, IGBTs oder LTRs vorgesehen, von denen hier beispielhaft GTOs dargestellt sind. Als Halbleiterschalter T7,...,T10 der Hilfsschalter 16 und 18 können SCRs, GTOs, ZTOs oder MCTs verwendet werden, von denen beispielhaft GTOs dargestellt sind.

Die Figur 2 zeigt eine vorteilhafte Ausführungsform der Wechselrichterphase 2, wobei gleiche Bauelemente mit denselben Bezugszeichen versehen sind wie in Figur 1. Gegenüber der Ausführungsform gemäß der Figur 1 sind anstelle einer Resonanz-Induktivität L_{R} zwei Resonanz-Induktivitäten L_{R1} und L_{R2} vorgesehen. Diese beiden Resonanz-Induktivitäten L_{R1} und L_{R2} sind jeweils mit einem Hilfsschalter 16 oder 18 elektrisch in Reihe geschaltet. Ferner sind gegenüber der Ausführungsform der Wechselrichterphase 2 anstelle des einen Resonanz-Kondensators C_{R} zwei Resonanz-Kondensatoren C_{R1} und C_{R2} vorgesehen. Die beiden Resonanz-Induktivitäten L_{R1} und L_{R2} können auch mit dem Resonanz-Kondensator C_{R} gemäß Figur 1 kombiniert werden.

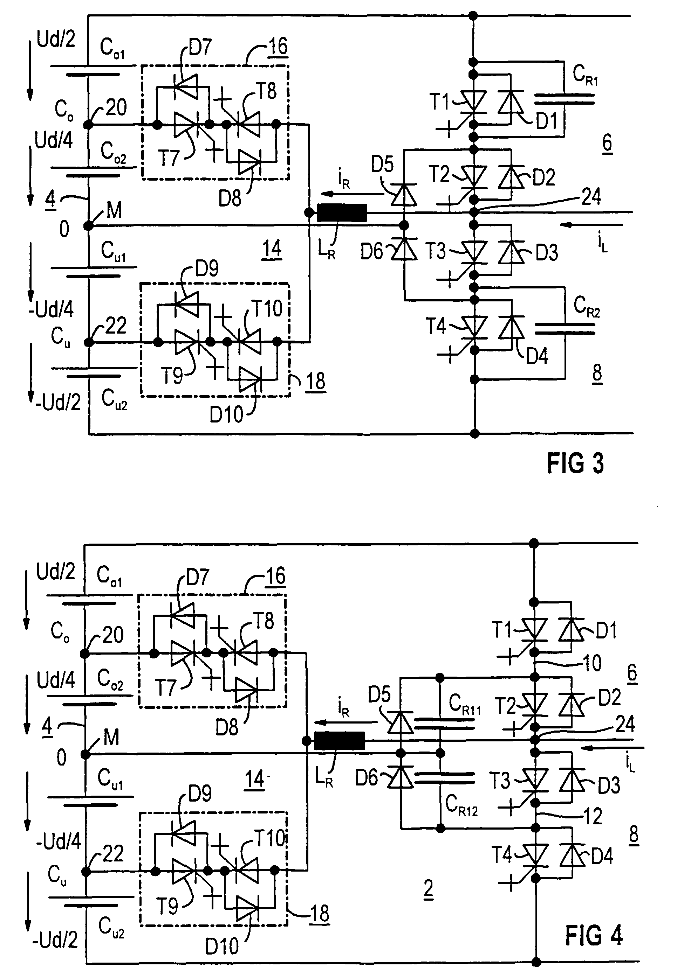

Die Ausführungsform der Wechselrichterphase 2 gemäß Figur 3 unterscheidet sich von der Ausführungsform gemäß Figur 1 dadurch, daß anstelle des einen Resonanz-Kondensators C_{R} zwei Resonanz-Kondensatoren C_{R1} und C_{R2} vorgesehen sind. Diese beiden Resonanz-Kondensatoren C_{R1} und C_{R2} sind jeweils einem äußeren Leistungshalbleiterschalter T1 und T4 der oberen und unteren Brückenhälfte 6 und 8 elektrisch parallel geschaltet. Ansonsten stimmt diese Ausführungsform mit der Ausführungsform gemäß Figur 1 überein.

Die Ausführungsform der Wechselrichterphase 2 gemäß Figur 4 unterscheidet sich von der Ausführungsform gemäß Figur 1 dadurch, daß anstelle des einen Resonanz-Kondensators C_{R} zwei Resonanz-Kondensatoren C_{R11} oder C_{R12} vorgesehen sind. Der Resonanz-Kondensator C_{R11} bzw. C_{R12} ist zwischen dem Verbindungspunkt 10 bzw. 12 der oberen bzw. unteren Leistungshalbleiterschalter T1 und T2 bzw. T3 und T4 und dem Verbindungspunkt M der beiden Kondensatoren Cₒ und Cᵤ des Gleichspannungs-Zwischenkreises 4 angeordnet. Ansonsten stimmt diese Ausführungsform mit der Ausführungsform gemäß Figur 1 überein.

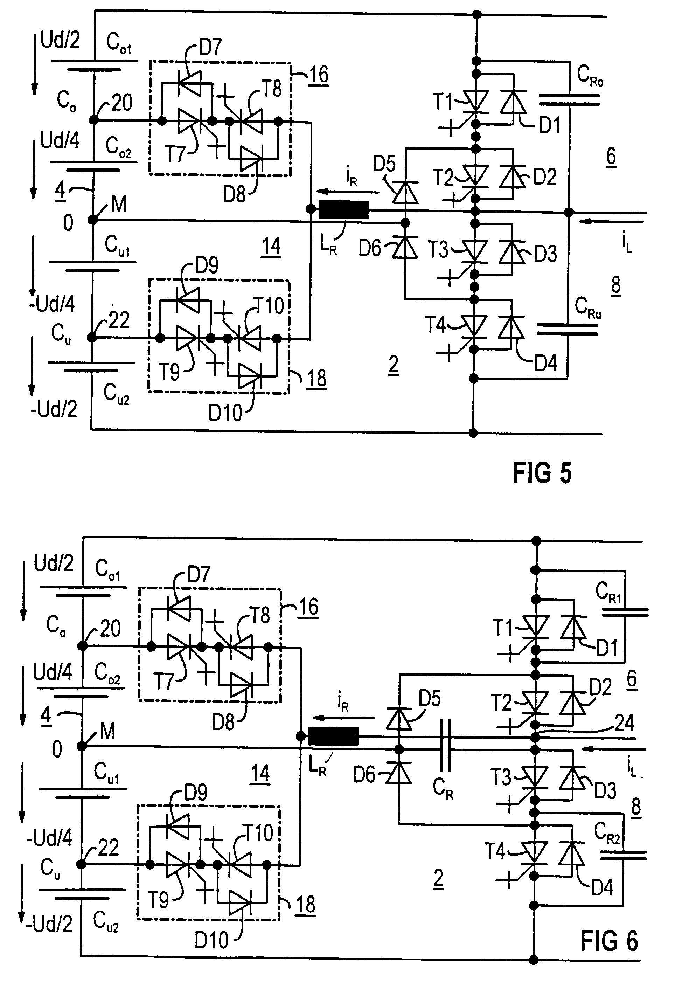

Die Ausführungsform der Wechselrichterphase 2 gemäß Figur 5 unterscheidet sich von der Ausführungsform gemäß Figur 1 dadurch, daß anstelle eines Resonanz-Kondensators C_{R} zwei Resonanz-Kondensatoren C_{Ro} und C_{Ru} vorgesehen sind. Der Resonanz-Kondensator C_{Ro} bzw. C_{Ru} ist elektrisch parallel zu den Leistungshalbleiterschaltern T1 und T2 bzw. T3 und T4 der oberen bzw. unteren Brückenhälfte 6 bzw. 8 geschaltet. Ansonsten stimmt diese Ausführungsform mit der Ausführungsform gemäß Figur 1 überein.

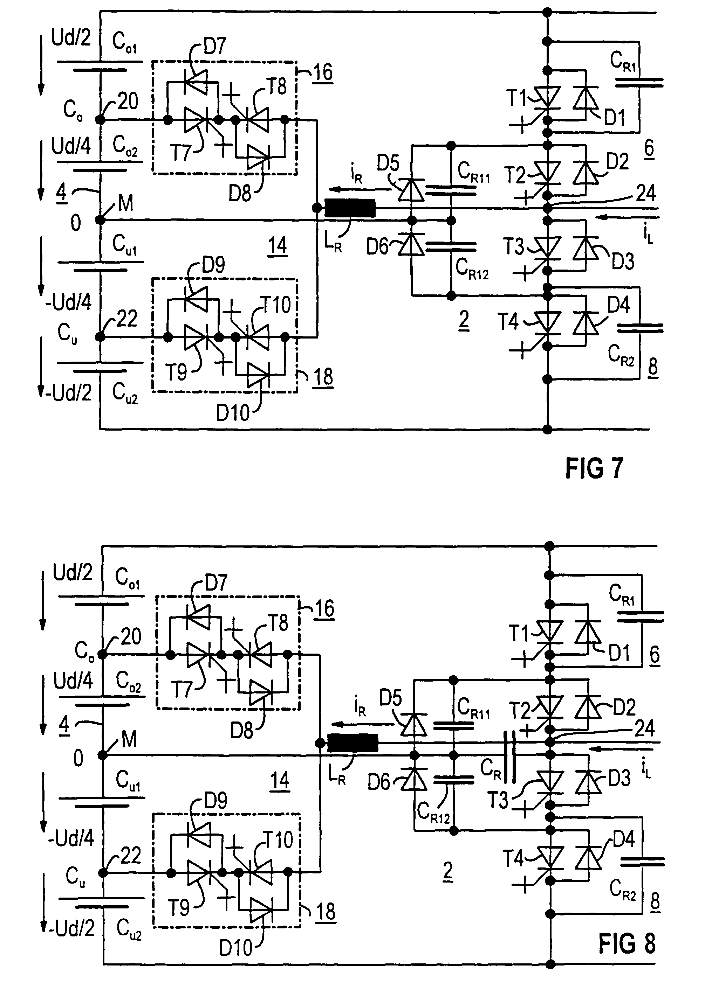

Die Ausführungsform der Wechselrichterphase 2 gemäß Figur 6 ist eine Kombination der Ausführungsformen gemäß den Figuren 1 und 3, wogegen die Ausführungsform der Wechselrichterphase 2 gemäß Figur 7 eine Kombination der Ausführungsform gemäß den Figuren 3 und 4 zeigt und die Ausführungsform der Wechselrichterphase 2 gemäß Figur 8 eine Kombination der Ausführungsformen gemäß der Figuren 1, 3 und 4 veranschaulicht.

Die Ausführungsform der Wechselrichterphase 2 gemäß den Figuren 1 und 3 bis 8 weisen jeweils nur eine Resonanz-Induktivität L_{R} auf. Anstelle dieser einen Resonanz-Induktivität L_{R} können diese Ausführungsformen der Wechselrichterphase 2 gemäß den Figuren 1 und 3 bis 8 auch zwei Resonanz-Induktivitäten L_{R1} und L_{R2}, wie in Figur 2 dargestellt, vorgesehen werden.

Im folgenden soll nun die Funktionsweise der Wechselrichterphase 2 gemäß Figur 3 dieses erfindungsgemäßen verlustarmen Leistungs-Wechselrichters anhand der Kommutierungsvorgänge von den unteren Leistungshalbleiterschaltern T3 und T4 auf die oberen Leistungshalbleiterschalter T1 bzw. D1 und T2 bzw. D2 (Beschreibungsteil A) sowie zurück (Beschreibungsteil B) beschrieben werden. Dabei wird angenommen, daß der Laststrom i_{L} in Richtung der Wechselrichterphase 2 über die Leistungshalbleiterschalter T3 und T4 fließt. Damit ein Umschwingvorgang möglich wird, müssen vom Verbindungspunkt M des Gleichspannungs-Zwischenkreises 4 verschiedene Spannungen generiert werden (hier z.B. durch Bildung von 1/4 U_{d}, 3/4 U_{d} mit zusätzlicher Aufteilung der Kondensatoren Cₒ und Cᵤ des Gleichspannungs-Zwischenkreises 4). Diese Spannungen können über die Hilfsschalter 16 und 18 an die Resonanz-Induktivität L_{R} geschaltet werden und wirken somit am Mittelpunkt als Stromquellen.

### A) Wechsel der Phasenausgangsspannung vom Potential -U_{d}/2 auf Potential +U_{d}/2:

### 1) Abschalten vom Leistungshalbleiterschalter T4:

Da der Laststrom i_{L} in Richtung der Wechselrichterphase 2 fließt, führen die Leistungshalbleiterschalter T3 und T4 den Strom. Der Resonanz-Kondensator C_{R2} ist entladen und der Resonanz-Kondensator C_{R1} ist auf +U_{d}/2 aufgeladen. Der Hilfsschalter 18 wird bei verschwindendem Strom (Zero Current Switching) und damit verlustlos eingeschaltet, wodurch sich in der Resonanz-Induktivität L_{R}, bedingt durch das Zuschalten von 1/4 U_{d} ein positiver Strom aufbaut, der sich dem von den Leistungshalbleiterschaltern T3 und T4 geführten Laststrom i_{L} überlagert. Sobald die Summe der Ströme i_{L} und i_{R} (Strom durch Resonanz-Induktivität L_{R}) groß genug ist, um die Auslegungsschaltgeschwindigkeit zu erreichen, wird der Leistungshalbleiterschalter T4 unter Spannung Null und damit verlustlos (Zero Voltage Switching) abgeschaltet. Der Summenstrom kommutiert in den parallelen Resonanz-Kondensator C_{R2}. Sobald die Spannung am Leistungshalbleiterschalter T4 den Wert +U_{d}/2 erreicht hat, beginnt die Entkopplungsdiode D6 zu leiten, wodurch der Ausgangs-Anschluß 24 der Wechselrichterphase 2 mit dem Verbindungspunkt M des Gleichspannungs-Zwischenkreises 4 verbunden ist. Die Summe aus den Strömen i_{R} und i_{L} wird über den Leistungshalbleiterschalter T3 und die Entkopplungsdiode D6 geführt. Der Strom i_{R} in der Resonanz-Induktivität L_{R} kann sich nun über den Kreishilfsschalter 18, Resonanz-Induktivität L_{R}, Leistungshalbleiterschalter T3 und Entkopplungsdiode D6 gegen die Spannung -1/4 U_{d} abbauen. Für diese Zeit sollte keine weitere Kommutierung in der Wechselrichterphase 2 zugelassen werden, da sonst der Hilfsschalter 18 abschalten und der Hilfsschalter 16 zuschalten müßte. Dies kann für die Hilfsschalter 16 und 18 nicht mehr verlustlos (Zero Current Switching) geschehen, vielmehr würden auftretende Überspannungen die Schaltelemente gefährden. Als nächstes wird der Leistungshalbleiterschalter T2 verlustlos eingeschaltet. Somit ist für den Fall des Stromnulldurchganges der entsprechende Pfad geschaffen.

Ist der Laststrom i_{L} groß genug, um ein Umschwingen der Spannung von sich aus und schnell genug zu ermöglichen, so kann das Zünden des Hilfsschalters 18 unterbleiben und der Leistungshalbleiterschalter T4 wird unmittelbar ausgeschaltet. In diesem Falle werden Verluste in den Leistungshalbleiterschaltern T4 und T3 und den Hilfsschaltern 16 und 18 eingespart. Der weitere Vorgang verläuft analog zu dem bereits genannten Vorgang.

### 2a) Abschalten vom Leistungshalbleiterschalter T3 (Laststrom i_{L} bleibt gleich orientiert):

Nachdem die Resonanz-Induktivität L_{R} stromlos ist, kann der Hilfsschalter 16 verlustlos eingeschalten werden (Zero Current Switching). Die Resonanz-Induktivität L_{R} wird an der Spannung 1/4 U_{d} aufmagnetisiert. Sobald die Stromsumme i_{L} und i_{R} groß genug ist, wird der Leistungshalbleiterschalter T3 abgeschaltet. Der Strom kommutiert über die Diode D2 auf den zum Leistungshalbleiterschalter T1 parallelen Resonanz-Kondensator C_{R1}, der nun von +U_{d}/2 auf Null entladen wird. Nun wird der Leistungshalbleiterschalter T1 verlustlos eingeschaltet (Zero Voltage Switching). Die Ventilspannung von dem Leistungshalbleiterschalter T3 schwingt auf den Wert von U_{d}/2, wodurch am Ausgangs-Anschluß 24 der Wechselrichterphase 2 die Spannung U_{d}/2 ansteht. Die Resonanz-Induktivität L_{R} magnetisiert sich gegen -1/4 U_{d} ab. Auch hier muß mit dem Abschalten vom Hilfsschalter 16 gewartet werden, bis die Resonanz-Induktivität L_{R} abmagnetisiert ist.

Ist der Strom groß genug, um ein Umschwingen der Spannung von sich aus und schnell genug zu ermöglichen, so kann das Zünden des Hilfsschalters 16 unterbleiben und der Leistungshalbleiterschalter T3 wird unmittelbar ausgeschaltet. In diesem Fall werden Verluste im Leistungshalbleiterschalter T3 und dem Hilfsschalter 16 eingespart.

### 2b) Abschalten vom Leistungshalbleiterschalter T3 (Laststrom i_{L} wechselt das Vorzeichen):

Bedingt durch den Nulldurchgang des Stromes i_{L} wird nun der Laststrom i_{L} über den Pfad Entkopplungsdiode D5 und Leistungshalbleiterschalter T2 geführt. Nachdem die Resonanz-Induktivität L_{R} stromlos ist, wird der Hilfsschalter 16 verlustlos eingeschaltet (Zero Current Switching). Die Resonanz-Induktivität L_{R} wird an der Spannung 1/4 U_{d} aufmagnetisiert, wodurch der Laststrom i_{L} nun auf den Strompfad Hilfsschalter 16 und Resonanz-Induktivität L_{R} kommutiert. Die Entkopplungsdiode D5 und der Leistungshalbleiterschalter T2 werden somit stromlos. Der über den Hilfsschalter 16 und die Resonanz-Induktivität L_{R} zusätzlich eingeführte Strom i_{R} wird über den Leistungshalbleiterschalter T3 und die Entkopplungsdiode D6 geführt. Sobald die Stromdifferenz i_{R}-i_{L} groß genug ist, wird der Leistungshalbleiterschalter T3 abgeschaltet. Der Strom kommutiert über die Diode D2 auf den zum Leistungshalbleiterschalter T1 parallelen Resonanz-Kondensator C_{R1}, der nun von +U_{d}/2 auf Null entladen wird. Nun wird der Leistungshalbleiterschalter T1 verlustlos eingeschaltet (Zero Voltage Switching). Die Spannung am Leistungshalbleiterschalter T3 schwingt auf den Wert von U_{d}/2, wodurch am Ausgangs-Anschluß 24 der Wechselrichterphase 2 eine Spannung von U_{d}/2 ansteht. Die Resonanz-Induktivität L_{R} magnetisiert sich gegen -1/4 U_{d} ab. Auch hier muß mit dem Abschalten vom Hilfsschalter 16 gewartet werden, bis die Resonanz-Induktivität L_{R} abmagnetisiert ist. Der Abschaltvorgang vom Leistungshalbleiterschalter T1 und T2 verläuft in analoger Weise wie das oben beschriebene Ausschalten der Leistungshalbleiterschalter T3 und T4.

### 3) Schnelle Kommutierung:

Aus den Abmagnetisierungszeiten der Resonanz-Induktivität L_{R} ergeben sich gewisse Mindestverweilzustände ±U_{d}/2 und Null, die unter Umständen unerwünscht sind und durch die schnelle Kommutierung von -U_{d}/2 auf +U_{d}/2 vermieden werden können. Der Kommutierungsvorgang kann sowohl durch Zünden vom Hilfsschalter 16 als auch vom Hilfsschalter 18 geschehen, wobei die Aufmagnetisierungszeit (bzw. Strom i_{R}) durch Betätigen des Hilfsschalters 18 etwas größer gewählt werden sollte als die Standardkommutierungszeit durch Betätigung des Hilfsschalters 16. In diesem Verfahren wird zuerst der Leistungshalbleiterschalter T4 abgeschaltet, sobald die Summe der Ströme i_{L} und i_{R} einen bestimmten Auslösegrenzwert überschritten hat. Der Summenstrom i_{L} und i_{R} kommutiert in den zum Leistungshalbleiterschalter T4 parallelen Resonanz-Kondensator C_{R2}. Sobald die Spannung am Leistungshalbleiterschalter T4 den Wert +U_{d}/2 erreicht hat, beginnt die Entkopplungsdiode D6 zu leiten, wodurch am Ausgangs-Anschluß 24 der Wechselrichterphase 2 eine Spannung Null ansteht. Die Summe aus den Strömen i_{R} und i_{L} wird über den Leistungshalbleiterschalter T3 und die Entkopplungsdiode D6 geführt. Nun wird der Leistungshalbleiterschalter T3 abgeschaltet, wodurch der Strom i_{R} und i_{L} über die Diode D2 auf den zum Leistungshalbleiterschalter T1 parallelen Resonanz-Kondensator C_{R1} kommutiert, der nun von +U_{d}/2 auf Null entladen wird. Nun werden die Leistungshalbleiterschalter T1 und T2 verlustlos eingeschaltet. Der Resonanzstrom i_{R} magnetisiert sich ab und die Dioden D1 und D2 führen den Laststrom i_{L}.

### B) Wechsel der Phasenausgangsspannung vom Potential +U_{d}/2 auf Potential -U_{d}/2:

### 1) Abschaltvorgang der antiparallel geschalteten Diode D1:

Der Strom i_{L} und i_{R} fließt im Moment über die antiparallel geschalteten Dioden D1 und D2. Zur Kommutierung dieser Dioden D1 und D2 muß der Laststrom i_{L} in die Resonanz-Induktivität L_{R} sowie ein zusätzlicher Strom i_{R}-i_{L} auf die Leistungshalbleiterschalter T1 und T2 umgeleitet werden. Dies wird durch Zünden des Hilfsschalters 16 eingeleitet. Der Strom i_{R} steigt über den Wert von i_{L} an, bis die zum Umschwingvorgang nötige Energie in der Resonanz-Induktivität L_{R} gespeichert ist. Sobald dieser Zustand erreicht ist, schaltet der Leistungshalbleiterschalter T1 ab und der Resonanz-Kondensator C_{R1} wird durch den in der Resonanz-Induktivität L_{R} überschüssigen Strom (i_{R}-i_{L}) umgeladen, wodurch der Leistungshalbleiterschalter T1 die Spannung U_{d}/2 aufnimmt. Die Resonanz-Induktivität L_{R} magnetisiert sich über den Kreis Entkopplungsdiode D_{5,} Leistungshalbleiterschalter T2, -U_{d}/4 und Resonanz-Induktivität L_{R} ab. Während dieser Zeit schaltet der Leistungshalbleiterschalter T3 verlustlos bei verschwindender Spannung zu. Der Laststrom i_{L} kann anschließend über den Leistungshalbleiterschalter T3, die Entkopplungsdiode D6 und den Verbindungspunkt M weitergeführt werden.

### 2a) Zuschalten von der Spannung -U_{d}/2 auf den Ausgangs-Anschluß 24 der Wechselrichterphase 2 (Strom hat das Vorzeichen nicht gewechselt):

Dazu muß der Hilfsschalter 18 eingeschaltet werden, der Laststrom i_{L} kommutiert auf den Zweig Resonanz-Induktivität L_{R}, Hilfsschalter 18 und -1/4 U_{d}. Der Strom i_{R} in der Resonanz-Induktivität L_{R} steigt an, bis der Laststrom i_{L} sowie die zum Umschwingen nötige Energie (wird über Entkopplungsdiode D5 und Leistungshalbleiterschalter T2 eingespeist) erreicht ist. Nun wird der Leistungshalbleiterschalter T2 verlustlos abgeschaltet und nimmt Spannung auf. Bei Spannung Null schaltet der Leistungshalbleiterschalter T4 verlustlos zu, da die Dioden D3 und D4 den Resonanzstrom i_{R} führen. Die Resonanz-Induktivität L_{R} magnetisiert sich gegen die Spannung U_{d}/4 ab.

### 2b) Zuschalten von der Spannung -U_{d}/2 auf den Ausgangs-Anschluß 24 der Wechselrichterphase 2 (der Strom hat das Vorzeichen gewechselt):

Der Laststrom i_{L} wird über die Entkopplungsdiode D5 und den Leistungshalbleiterschalter T2 geführt. Die Orientierung des Stromes i_{L} ist in diesem Fall günstiger als bei dem oben beschriebenen Kommutierungsvorgang nach Vorzeichenwechsel. Der Hilfsschalter 18 schaltet verlustlos ein. Dem Strom durch die Entkopplungsdiode D5 und dem Leistungshalbleiterschalter T2 überlagert sich ein zusätzlicher Strom, bis die zum Umschwingen nötige Energie erreicht ist. Nun wird der Leistungshalbleiterschalter T2 verlustlos abgeschaltet und nimmt Spannung auf. bei Spannung Null schaltet der Leistungshalbleiterschalter T4 verlustlos zu, da die Dioden D3 und D4 den Resonanzstrom i_{R} führen. Die Resonanz-Induktivität L_{R} magnetisiert sich gegen die Spannung U_{d}/4 ab.

### 3) Schnelle Diodenkommutierung:

Ebenso wie bei den Leistungshalbleiterschaltern T1,...,T4 ist bei Diodenfreilauf ein schneller Übergang von der Spannung +U_{d}/2 zu -U_{d}/2 möglich. Nachdem die Resonanz-Induktivität L_{R} entweder durch Zuschalten des Hilfsschalters 16 oder 18 entsprechend vorgestromt ist (der Laststrom i_{L} wird wie bei Diodenfreilauf in den Hilfszweig kommutiert), wird zuerst der Leistungshalbleiterschalter T1 abgeschaltet, sobald die Differenz vom Laststrom i_{R} und dem Resonanzstrom i_{R} einen bestimmten Auslösegrenzwert überschritten hat. Der Auslösegrenzwert wird dabei in der Regel höher gewählt, als bei der Standardkommutierung. Der überschüssige Strom kommutiert in den zum Leistungshalbleiterschalter T1 parallelen Resonanz-Kondensator C_{R1}. Sobald die Spannung am Leistungshalbleiterschalter T1 den Wert +U_{d}/2 erreicht hat, beginnt die Entkopplungsdiode D5 zu leiten, wodurch am Ausgangs-Anschluß 24 der Wechselrichterphase 2 die Spannung Null ansteht. Die Differenz aus Resonanzstrom i_{R} und Laststrom i_{L} wird über den Leistungshalbleiterschalter T2 und die Entkopplungsdiode D5 geführt. Nun wird der Leistungshalbleiterschalter T2 abgeschaltet, der Strom kommutiert über die Diode D3 auf den zum Leistungshalbleiterschalter T4 parallelen Resonanz-Kondensator C_{R2}, der nun von +U_{d}/2 auf Null entladen wird. Bei Spannung Null schalten die Leistungshalbleiterschalter T3 und T4 verlustlos zu, da die Dioden D3 und D4 den Resonanzstrom i_{R} führen. Die Resonanz-Induktivität L_{R} magnetisiert sich ab.

Anstelle der oben geschilderten überlappenden Betriebsweise (die Leitdauern der Hilfsschalter 16 und 18 und der auszuschaltenden Leistungshalbleiterschalter T1,...,T4 überlappen sich) kann auch eine Betriebsweise ohne überlappende Leitdauern eingestellt werden. Für den erfindungsgemäßen Leistungs-Wechselrichter wird diese alternative Betriebsweise im folgenden anhand der Kommutierungsvorgänge von den unteren Leitungshalbleiterschalter T₃, T₄ auf die oberen Leistungshalbleiterschalter T₁ bzw. D1, T₂ bzw. D2 der Wechselrichterphase 2 des verlustarmen Leitungs-Wechselrichtersnäher näher erläutert.

Dabei wird wiederum von der Wechselrichterphase 2 nach Figur 3 ausgegangen.

Es wird angenommen, daß der Laststrom i_{L} in Richtung der Wechselrichterphase 2 über die Leistungshalbleiterschalter T₃ und T₄ fließt.

### A) Wechsel des Potentials am Ausgangs-Anschluß 24 der Wechselrichterphase 2 von -U_{d}/2 über Potential Null auf +U_{d}/2:

### 1) Abschalten vom Leistungshalbleiterschalter T₄:

Da der Strom i_{L} in Richtung der Wechselrichterphase 2 fließt, führen die Leitungshalbleiterschalter T₃ und T₄ den Strom i_{L}. Der Schwingkreiskondensator C_{R2} ist entladen und der Resonanz-Kondensator C_{R1} ist auf +U_{d}/2 aufgeladen. Es wird zuerst der Leitungshalbleiterschalter T4 abgeschaltet. Der Laststrom i_{L} kommutiert auf den Resonanz-Kondensator CR2 und beginnt diesen aufzuladen. Bei genügend großem Laststrom iL kann die Spannung hinreichend schnell ansteigen. Zumindest bei kleinem Lastsrom empfiehlt es sich, zusätzlich die Hilfsschaltung 14 zu verwenden. Der Hilfsschalter 18 wird nach dem Verlöschen des Leistungshalbleiterschalters T₄ durch die Resonanz-Induktivität L_{R} entlastet und daher verlustfrei eingeschaltet. In der Resonanz-Induktivität L_{R} baut sich bedingt durch das Zuschalten von 1/4 U_{d} ein positiver Resonanzstrom i_{R} auf, der sich im Leitungshalbleiterschalter T₃ und in dem Resonanz-Kondensator C_{R2} dem Laststrom i_{L} überlagert und damit den Umschwingvorgang beschleunigt. Der Resonanzstrom i_{R} wird wieder verringert, sobald die Spannung am Resonanz-Kondensator C_{R2} den Wert U_{d}/4 überschritten hat. Sobald die Spannung an Resonanz-Kondensator C_{R2} und damit auch die Spannung am Leistungshalbleiterschalter T₄ den Wert +U_{d}/2 erreicht hat, beginnt die Entkopplungsdiode D₆ zu leiten. Die Wechselrichterphase 2 befindet sich im Null-Zustand. Zu diesem Zeitpunkt hat sich der Resonanzstrom i_{R} bereits wieder abgebaut. Der Laststrom i_{L} fließt nun über den Leistungshalbleiterschalter T₃ und der Entkopplungsdiode D₆. Der Leistungshalbleiterschalter T₂ wird verlustlos eingeschalten. Somit ist für den Fall des Stromnulldurchganges der entsprechende Pfad geschaffen.

### 2a) Abschalten vom Leistungshalbleiterschalter T₃ (Laststrom i_{L} bleibt gleich orientiert):

Der Leistungshalbleiterschalter T₃ wird abgeschaltet. Der Strom i_{L} kommutiert über die Diode D₂ auf den zum Leistungshalbleiterschalter T₁ parallelen Resonanz-Kondensator C_{R1}, der nun vom Potential +U_{d}/2 auf Null entladen wird. Auch hier kann bei Bedarf die Hilfsschaltung 14 zur Beschleunigung des Umschwingvorgangs zugeschaltet werden. Dazu kann der Hilfsschalter 16 verlustlos eingeschaltet werden. Die Resonanz-Induktivität L_{R} wird an der Spannung U_{CR1}-1/4 U_{d} aufmagnetisiert und im weiteren Verlauf des Schwingungsvorgangs wieder abmagnetisiert. Die Spannung am Leistungshalbleiterschalter T₃ schwingt auf den Wert von U_{d}/2. Am Ausgangs-Anschluß 24 der Wechselrichterphase 2 ist somit das Potential U_{d}/2 geschaltet. Die Diode D₁ übernimmt den Laststrom i_{L}. Somit leiten nun die Dioden D₁ und D₂.

### 2b) Abschalten vom Leistungshalbleiterschalter T₃ (Laststrom i_{L} wechselt das Vorzeichen):

Bedingt durch den Nulldurchgang des Stromes i_{L} wird nun der Laststrom i_{L} über den Strompfad Entkopplungsdiode D₅ und Leistungshalbleiterschalter T₂ geführt. Der Umschaltvorgang verläuft nun im Prinzip genauso wie noch beim Zuschalten von -U_{d}/2 auf den Ausgangs-Anschluß 24 beschrieben wird; es sind jedoch die spiegelbildlichen Bauteile beteiligt. Zunächst wird wiederum der Leistungshalbleiterschalter T₃ ausgeschaltet. Dies hat keine Auswirkung, da der Leistungshalbleiterschalter T₃ stromlos ist. Danach wird der Hilfsschalter 16 stromlos eingeschaltet. Die Resonanz-Induktivität L_{R} wird an der Spannung 1/4 U_{d} aufmagnetisiert, der Lastrom i_{L} kommutiert nun auf den Hilfskreis 16 und die Resonanz-Induktivität L_{R}. Die Entkopplungsdiode D₅ und der Leistungshalbleiterschalter T₂ werden somit stromlos. Der Diodenrückstrom von der Entkopplungsdiode D₅ führt zu einer Überladung von der Resonanz-Induktivität L_{R} mit zusätzlichem Strom (|I_{R}|-|I_{L}|>0), der wie in der oben beschriebenen Betriebsweise zur beschleunigten Umladung der Kondensatorspannung genutzt wird. Nach dem Abriß des Diodenrückstroms fließt dieser Differenzstrom über die Diode D₂ in den Resonanz-Kondensator C_{R1}. Damit schwingt die Spannung am Resonanz-Kondensator C_{R1} vom Potential U_{d}/2 bis auf Null, so daß am Ausgang-Anschluß 24 der Wechselrichterphase 2 nun das Potential +U_{d}/2 anliegt. Der noch nicht vollständig abgebaute Überschußstrom i_{R}-i_{L} fließt nun über die Diode D₁, so daß am Leistungshalbleiterschalter T₁ die Spannung Null anliegt und er verlustlos einschalten kann (Zero Voltage Switching). Sollte der Diodenrückstrom nicht ausreichen, um den Resonanz-Kondensator C_{R1} vollständig zu entladen, so muß der Leistungshalbleiterschalter T₁ im Augenblick der geringsten Blockierspannung (ca. 20% von U_{d}/2) eingeschaltet werden. Die dabei entstehenden Verluste durch Entladen vom Resonanz-Kondensator C_{R1} in den Leistungshalbleiterschalter T₁ hinein sind in der Regel gering gegenüber den Einschaltverlusten bei herkömmlichen Einschaltvorgängen.

Der Abschaltvorgang vom Leistungshalbleiterschalter T₁ und T₂ verläuft in analoger Weise, wie das oben beschriebene Ausschalten vom Leitungshalbleiterschalter T₃ und T_{4.}

### B) Wechsel der Phasenausgangsspannung von Potential +U_{d}/2 über Potential Null auf Potential -U_{d}/2:

### 1) Abschaltvorgang der antiparallel geschalteten Diode D₁:

Der Strom i_{L} fließt im Moment über die Dioden D₁ und D₂. Zur Kommutierung der Dioden D₁ und D₂ muß der Laststrom i_{L} in die Resonanz-Induktivität L_{R} umgeleitet werden. Dies wird durch Einschalten des Hilfsschalter 16 eingeleitet. Der Resonanzstrom i_{R} steigt über den Wert des Laststromes i_{L} an, bis der Diodenrückstrom der Diode D₁ abreißt. In der Resonanz-Induktivität L_{R} ist bei genügend großem Diodenrückstrom die zum Umschwingvorgang nötige Energie gespeichert. Sobald die Diode D₁ sperrt, wird der Resonanz-Kondensator C_{R1} duch den in der Resonanz-Induktivität L_{R} überschüssigen Strom (i_{R}-i_{L}) umgeladen. Der Leistungshalbleiterschalter T₁ nimmt die Spannung U_{d}/2 auf. Die Resonanz-Induktivität L_{R} magnetisiert sich über die Entkopplungsdiode D₅ und den Leistungshalbleiterschalter T₂ gegen U_{d}/4 ab. Während dieser Zeit schaltet der Leistungshalbleiterschalter T₃ verlustlos unter Spannungsnull zu, der Laststrom i_{L} kann anschließend über den Leistungshalbleiterschalter T₃, der Entkopplungsdiode D₆ und dem Verbindungspunkt M weitergeführt werden. Reicht der Diodenrückstrom von der Diode D₁ nicht für ein vollständiges Umschwingen der Spannung an dem Resonanz-Kondensator C_{R1} aus, so muß der Leistungshalbleiterschalter T₃ bei einer Restspannung eingeschaltet werden, wobei schlagartiger der Resonanz-Kondensator C_{R1} auf Null entladen wird. Die entstehende Verlustenergie ist aber relativ gering.

### 2a) Zuschalten vom Potential -U_{d}/2 auf den Ausgangs-Anschluß 24 der Wechselrichterphase 2 (Strom hat Vorzeichen nicht gewechselt):

Dazu darf zunächst der Leistungshalbleiterschalter T₂ abgeschaltet werden (stromlos, also ohne Auswirkung). Anschließend muß der Hilfsschalter 18 eingeschaltet werden, wodurch der Laststrom i_{L} auf den Zweig Resonanz-Induktivität L_{R}, Hilfsschalter 16, -1/4 U_{d} kommutiert. Der Strom i_{R} in der Induktivität L_{R} steigt an, bis er den Laststrom i_{L} sowie den Diodenrückstrom der Entkopplungsdiode D₆ und damit die zum Umschwingen nötige Energie erreicht. In diesem Augenblick beginnen die Entkopplungsdiode D₆ und der Leistungshalbleiterschalter T₂ Spannung aufzunehmen (D6 sperrt). Bei Spannungsnull schaltet der Leistungshalbleiterschalter T₄ verlustlos zu, da die Dioden D₃ und D₄ den Zusatzstrom iR führen. Die Resonanz-Induktivität L_{R} magnetisiert sich gegen die Spannung U_{d}/4 ab. Bei zu geringem Diodenrückstrom ist auch hier aktives Einschalten vom Leistungshalbleiterschalter T₄ im Spannungsminimum erforderlich.

### 2b) Zuschalten vom Potential -U_{d}/2 auf den Ausgangs-Anschluß 24 der Wechselrichterphase 2 (der Strom hat Vorzeichen gewechselt):

Der Laststrom i_{L} wird über die Entkopplungsdiode D₅ und den Leistungshalbleiterschalter T₂ geführt. Die Orientierung des Stromes i_{L} ist in diesem Falle günstiger, als bei dem oben beschriebenen Kommutierungsvorgang nach Vorzeichenwechsel. Der Schalter T₂ wird abgeschaltet, der Laststrom i_{L} kommutiert in die Diode D₃ und den Resonanz-Kondensator C_{R2}, der damit entladen wird. Zur Beschleunigung des Umschwingvorgangs kann der Hilfsschalter 18 verlustlos eingeschaltet werden. Dem Entladestrom vom Resonanz-Kondensator C_{R2} überlagert sich ein zusätzlicher Strom. Bei Spannungsnull schaltet der Leistungshalbleiterschalter T₄ verlustlos zu, da die Dioden D₃ und D₄ den Laststrom i_{L} führen.

Der beschriebene Leistungs-Wechselrichter verwendet im Resonanzkreis eine lineare Drossel L_{R}. Um eine kurze Umschwingzeit zu erreichen, muß die Drossel L_{R} mit kleiner Induktivität ausgelegt werden. Bei der alternativen Betriebsweise, in der der Rückstrom der Dioden ausgenutzt wird, um Energie für den Umschwingvorgang aufzunehmen, ist eine kleine Induktivität noch aus einem zweiten Grund wichtig. Je kleiner die Induktivität ist, desto größer der Stromanstieg in der Resonanz-Induktivität L_{R}, desto größer auch das di/dt des Diodenstroms, und umso größer ist die Sperrverzugsladung der Diode. Bei zu langsamen Stromanstiegsgeschwindigkeiten ist die Speicherladung der Diode im Stromnulldurchgang bereits teilweise rekombiniert, so daß die Sperrverzugsladung und damit die Anfangsenergie des Umschwingvorgangs zu gering ausfällt.

Andererseits ist eine kleine Induktivität ungünstig für die Beanspruchung der Hilfsschalter 16 und 18, die nun mit relativ hohen Schaltverlusten beaufschlagt werden.

Abhilfe schafft die Verwendung einer sättigbaren Drossel. Sie besitzt bei geringen Strömen eine große Induktivität, so daß die Schaltverluste der Hilfsschalter 16 und 18 gering bleiben, und sorgt gleichzeitig für eine steile Kommutierung der Dioden mit genügend hoher Sperrverzugsladung.

## Patentansprüche

1. Verlustarmer Leistungs-Wechselrichter, wobei jede elektrisch parallel zu einem aus einer Reihenschaltung zweier Kondensatoren (Cₒ, Cᵤ) bestehenden Gleichspannungs-Zwischenkreis (4) geschaltete Wechselrichterphase (2) eine obere und eine untere Brückenhälfte (6,8) aufweist, die jeweils zwei Leistungshalbleiterschalter (T1,T2 bzw. T3,T4) mit antiparallel geschalteten Dioden (D1,D2 bzw. D3,D4) enthält, wobei jeweils ein Verbindungspunkt (10,12) der beiden oberen und unteren Leistungshalbleiterschalter (T1,T2 bzw. T3,T4) mittels einer Entkopplungsdiode (D5,D6) mit einem Verbindungspunkt (M) der beiden Kondensatoren (cₒ,cᵤ) des Gleichspannungs-Zwischenkreises (4) verbunden ist, wobei der obere und der untere Kondensator (Cₒ,Cᵤ) des Gleichspannungs-Zwischenkreises (4) jeweils in zwei gleich große Kondensatoren (Cₒ₁,Cₒ₂ bzw. Cᵤ₁,Cᵤ₂) aufgeteilt ist, wobei eine Hilfsschaltung (14), bestehend aus einem oberen und einem unteren Hilfsschalter (16, 18), die elektrisch in Reihe mit einer Resonanz-Induktivität (L_{R}) geschaltet sind, vorgesehen ist, der einen Verbindungspunkt (20,22) der oberen und unteren Kondensatoren (Cₒ₁, Cₒ₂ bzw. Cᵤ₁,Cᵤ₂) des Gleichspannungs-Zwischenkreises (4) mit einem Ausgangs-Anschluß (24) der Wechselrichterphase (2) verbindet und wobei für Leistungshalbleiterschalter (T1,...,T4) der Wechselrichterphase (2) wenigstens ein Resonanz-Kondensator (C_{R},C_{R1},C_{R2},C_{R11},C_{R21},C_{Ro},C_{Ru}) vorgesehen ist.

2. Verlustarmer Leistungs-Wechselrichter nach Anspruch 1, wobei jeder Hilfsschalter (16, 18) elektrisch in Reihe mit einer Resonanz-Induktivität (L_{R1},L_{R2}) geschaltet ist.

3. Verlustarmer Leistungs-Wechselrichter nach Anspruch 1, wobei den äußeren Leistungshalbleiterschaltern (T1,T4) der oberen und unteren Brückenhälfte (6,8) jeweils ein Resonanz-Kondensator (C_{R1},C_{R2}) elektrisch parallel geschaltet ist.

4. Verlustarmer Leistungs-Wechselrichter nach Anspruch 1, wobei zwischen den Verbindungspunkten (10,12) der beiden oberen und unteren Leistungshalbleiterschalter (T1,T2 bzw. T3, T4) und dem Verbindungspunkt (M) des Gleichspannungs-Zwischenkreises (4) jeweils ein Resonanz-Kondensator (C_{R11}, C_{R21}) geschaltet ist.

5. Verlustarmer Leistungs-Wechselrichter nach Anspruch 1, wobei zwischen dem Ausgangs-Anschluß (24) der Wechselrichterphase (2) und dem Verbindungspunkt (M) des Gleichspannungs-Zwischenkreises (4) ein Resonanz-Kondensator (C_{R}) geschaltet ist.

6. Verlustarmer Leistungs-Wechselrichter nach Anspruch 1, wobei elektrisch parallel zur oberen und unteren Brückenhälfte (6,8) jeweils ein Resonanz-Kondensator (C_{Ro},C_{Ru}) geschaltet ist.

7. Verlustarmer Leistungs-Wechselrichter nach Anspruch 1, wobei die Anordnung der Resonanz-Kondensatoren (C_{R1},C_{R2}) gemäß Anspruch 3 und die Anordnung der Resonanz-Kondensatoren (C_{R11},C_{R21}) gemäß Anspruch 4 kombiniert sind.

8. Verlustarmer Leistungs-Wechselrichter nach Anspruch 1, wobei die Anordnung der Resonanz-Kondensatoren (C_{R1},C_{R2}) gemäß Anspruch 3 und die Anordnung des Resonanz-Kondensators (C_{R}) gemäß Anspruch 5 kombiniert sind.

9. Verlustarmer Leistungs-Wechselrichter nach Anspruch 1, wobei die Anordnungen der Resonanz-Kondensatoren (C_{R1},C_{R2}, C_{R11},C_{R21},C_{R}) gemäß den Ansprüchen 3, 4 und 5 miteinander kombiniert sind.

10. Verlustarmer Leistungs-Wechselrichter nach Anspruch 1, wobei als Leistungshalbleiterschalter (T1,...,T4) ein abschaltbarer Leistungshalbleiterschalter vorgesehen ist.

11. Verlustarmer Leistungs-Wechselrichter nach Anspruch 1, wobei jeder Hilfsschalter (16,18) zwei Halbleiterschalter (T7,T8;T9,T10) mit antiparallel geschalteten Dioden (D7,D8; D9,D10) aufweist, die derart elektrisch in Reihe geschaltet sind, daß deren Kathoden miteinander verbunden sind.

12. Verlustarmer Leistungs-Wechselrichter nach Anspruch 11, wobei als Hochleistungs-Stromrichter (T7,...,T10) ein abschaltbarer Leistungshalbleiterschalter vorgesehen ist.

13. Verlustarmer Leistungs-Wechselrichter nach Anspruch 1 oder 2, wobei als Resonanz-Induktivität (L_{R}) eine sättigbare Drossel vorgesehen ist.

14. Verlustarmer Leistungs-Wechselrichter nach Anspruch 3, wobei als äußerer Leistungshalbleiterschalter (T₁ bzw. T₄) der oberen bzw. unteren Brückenhälfte (6 bzw. 8) eine Reihenschaltung zweier Leistungshalbleiterschalter vorgesehen ist, die jeweils mit einem parallelen Resonanz-Kondensator versehen sind.

15. Verlustarmer Leistungs-Wechselrichter nach Anspruch 3, wobei als äußerer Leistungshalbleiterschalter (T₁ bzw. T₄) der oberen bzw. unteren Brückenhälfte (6 bzw. () eine Reihenschaltung zweier Leistungshalbleiterschalter vorgesehen ist, die mit einem parallelen Resonanz-Kondensator versehen sind.

16. Verlustarmer Leistungs-Wechselrichter nach Anspruch 1, wobei als Entkopplungsdiode (D5, D6) eine Reihenschaltung zweier Dioden vorgesehen ist, die jeweils mit einem parallelen Resonanz-Kondensator versehen sind.

## Claims

1. A low-loss power inverter, wherein each inverter phase (2) electrically connected in parallel to a d.c.-voltage link (4), consisting of a serial arrangement of two capacitors (Cₒ, Cᵤ), has an upper and a lower bridge half (6, 8) which in each case comprises two power semiconductor switches (T1, T2 and T3, T4) with antiparallel-connected diodes (D1, D2 and D3, D4), wherein a connection point (10, 12) of the two upper and lower power semiconductor switches (T1, T2 and T3, T4) is in each case connected by means of a decoupling diode (D5, D6) to a connection point (M) of the two capacitors (Cₒ, Cᵤ) of the d.c.-voltage link (4), wherein the upper and lower capacitors (Cₒ, Cᵤ) of the d.c.-voltage link (4) are in each case divided into two capacitors (Cₒ₁, Cₒ₂ and Cᵤ₁, Cᵤ₂) of equal magnitude, wherein an auxiliary circuit (14) is provided consisting of an upper and a lower auxiliary switch (16, 18) which are electrically connected in series with a resonant inductance (L_{R}) and connect a connection point (20, 22) of the upper and lower capacitors (Cₒ₁, Cₒ₂ and Cᵤ₁, Cᵤ₂) of the d.c.-voltage link (4) to an output terminal (24) of the inverter phase (2), and wherein at least one resonant capacitor (C_{R}, C_{R1}, C_{R2}, C_{R11}, C_{R21}, C_{Ro}, C_{Ru}) is provided for power semiconductor switches (T1, ..., T4) of the inverter phase (2).

2. A low-loss power inverter according to Claim 1, wherein each auxiliary switch (16, 18) is electrically connected in series with a resonant inductance (L_{R1}, L_{R2}),

3. A low-loss power inverter according to Claim 1, wherein a resonant capacitor (C_{R1}, C_{R2}) is in each case electrically connected in parallel with the outer power semiconductor switches (T1, T4) of the upper and lower bridge halves (6, 8).

4. A low-loss power inverter according to Claim 1, wherein a resonant capacitor (C_{R11}, C_{R21}) is in each case connected between the connection points (10, 12) of the two upper and lower power semiconductor switches (T1, T2 and T3, T4) and the connection point (M) of the d.c.-voltage link (4).

5. A low-loss power inverter according to Claim 1, wherein a resonant capacitor (C_{R}) is connected between the output terminal (24) of the inverter phase (2) and the connection point (M) of the d.c.-voltage link (4).

6. A low-loss power inverter according to Claim 1, wherein a resonant capacitor (C_{Ro}, C_{Ru}) is in each case electrically connected in parallel to the upper and lower bridge halves (6, 8).

7. A low-loss power inverter according to Claim 1, wherein the arrangement of the resonant capacitors (C_{R1}, C_{R2}) according to Claim 3 and the arrangement of the resonant capacitors (C_{R11}, C_{R21}) according to Claim 4 are combined.

8. A low-loss power inverter according to Claim 1, wherein the arrangement of the resonant capacitors (C_{R1}, C_{R2}) according to Claim 3 and the arrangement of the resonant capacitor (C_{R}) according to Claim 5 are combined.

9. A low-loss power inverter according to Claim 1, wherein the arrangements of the resonant capacitors (C_{R1}, C_{R2}, C_{R11}, C_{R21}, C_{R}) according to Claims 3, 4 and 5 are combined with one another.

10. A low-loss power inverter according to Claim 1, wherein a turn-off power semiconductor switch is provided as power semiconductor switch (T1, ..., T4).

11. A low-loss power inverter according to Claim 1, wherein each auxiliary switch (16, 18) comprises two semiconductor switches (T7, T8; T9, T10) with antiparallel-connected diodes (D7, D8; D9, D10) which are electrically connected in series such that their cathodes are connected to one another.

12. A low-loss power inverter according to Claim 11, wherein a turn-off power semiconductor switch is provided as high-power converter (T7, ..., T10).

13. A low-loss power inverter according to Claim 1 or 2, wherein a saturable reactor is provided as resonant inductance (L_{R}).

14. A low-loss power inverter according to Claim 3, wherein a serial arrangement of two power semiconductor switches, which are in each case provided with a parallel resonant capacitor, serves as outer power semiconductor switch (T₁ and T₄) of the upper and lower bridge halves (6 and 8).

15. A low-loss power inverter according to Claim 3, wherein a serial arrangement of two power semiconductor switches, which are provided with a parallel resonant capacitor, serves as outer power semiconductor switch (T₁ and T₄) of the upper and lower bridge halves (6 and 8).

16. A low-loss power inverter according to Claim 1, wherein a serial arrangement of two diodes, which are in each case provided with a parallel resonant capacitor, serves as decoupling diode (D5, D6).

## Revendications

1. Onduleur de puissance à faibles pertes, dans lequel chaque phase d'onduleur (2) branchée électriquement en parallèle avec un circuit intermédiaire en tension continue (4) constitué d'un branchement série de deux condensateurs (Cₒ, Cᵤ) comporte un demi-pont supérieur (6) et un demi-pont inférieur (8) qui contiennent chacun deux commutateurs semi-conducteurs de puissance (T1, T2 ou T3, T4) avec des diodes branchées en antiparallèle (D1, D2 ou D3, D4), à chaque fois, un point de jonction (10, 12) des deux commutateurs semi-conducteurs de puissance supérieurs et inférieurs (T1, T2 ou T3, T4) est relié au moyen d'une diode de découplage (D5, D6) à un point de jonction (M) des deux condensateurs (Cₒ, Cᵤ) du circuit intermédiaire en tension continue (4), le condensateur supérieur (Cₒ) et le condensateur inférieur (Cᵤ) du circuit intermédiaire en tension continue (4) sont divisés à chaque fois en deux condensateurs de grandeur identique (Cₒ₁, Cₒ₂ ou Cᵤ₁, Cᵤ₂), il est prévu un circuit auxiliaire (14) constitué d'un commutateur auxiliaire supérieur (16) et d'un commutateur auxiliaire inférieur (18) qui sont branchés électriquement en série avec une inductance à résonance (L_{R}) et qui relient un point de jonction (20, 22) des condensateurs supérieurs (Cₒ₁, Cₒ₂) ou des condensateurs inférieurs (Cᵤ₁, Cᵤ₂) du circuit intermédiaire en tension continue (4) à une borne de sortie (24) de la phase d'onduleur (2) et il est prévu pour des commutateurs semi-conducteurs de puissance (T1 à T4) de la phase d'onduleur (2) au moins un condensateur à résonance (C_{R}, C_{R1}, C_{R2}, C_{R11}, C_{R21}, C_{Ro}, C_{Ru}).

2. Onduleur de puissance à faibles pertes selon la revendication 1, dans lequel chaque commutateur auxiliaire (16, 18) est branché électriquement en série avec une inductance à résonance (L_{R1}, L_{R2}).

3. Onduleur de puissance à faibles pertes selon la revendication 1, dans lequel un condensateur à résonance (C_{R1}, C_{R2}) est branché à chaque fois électriquement en parallèle avec les commutateurs semi-conducteurs de puissance extérieurs (T1, T4) des demi-ponts supérieur et inférieur (6, 8).

4. Onduleur de puissance à faibles pertes selon la revendication 1, dans lequel un condensateur à résonance (C_{R11}, C_{R21}) est branché à chaque fois entre les points de jonction (10, 12) des deux commutateurs semi-conducteurs de puissance supérieurs et inférieurs (T1, T2 ou T3, T4) et le point de jonction (M) du circuit intermédiaire en tension continue (4).

5. Onduleur de puissance à faibles pertes selon la revendication 1, dans lequel un condensateur à résonance (C_{R}) est branché entre la borne de sortie (24) de la phase d'onduleur (2) et le point de jonction (M) du circuit intermédiaire en tension continue (4).

6. Onduleur de puissance à faibles pertes selon la revendication 1, dans lequel un condensateur à résonance (C_{Ro}, C_{Ru}) est branché à chaque fois électriquement en parallèle avec les demi-ponts supérieur et inférieur (6, 8).

7. Onduleur de puissance à faibles pertes selon la revendication 1, dans lequel la disposition des condensateurs à résonance (C_{R1}, C_{R2}) selon la revendication 3 et la disposition des condensateurs à résonance (C_{R11}, C_{R21}) selon la revendication 4 sont combinées.

8. Onduleur de puissance à faibles pertes selon la revendication 1, dans lequel la disposition des condensateurs à résonance (C_{R1}, C_{R2}) selon la revendication 3 et la disposition du condensateur à résonance (C_{R}) selon la revendication 5 sont combinées.

9. Onduleur de puissance à faibles pertes selon la revendication 1, dans lequel les dispositions des condensateurs à résonance (C_{R1}, C_{R2}, C_{R11}, C_{R21}, C_{R}) selon les revendications 3, 4 et 5 sont combinées.

10. Onduleur de puissance à faibles pertes selon la revendication 1, dans lequel il est prévu comme commutateur semi-conducteur de puissance (T1 à T4) un commutateur semi-conducteur de puissance interruptible.

11. Onduleur de puissance à faibles pertes selon la revendication 1, dans lequel chaque commutateur auxiliaire (16, 18) comporte deux commutateurs semi-conducteurs (T7, T8 ; T9, T10) avec des diodes branchées en antiparallèle (D7, D8 ; D9, D10) qui sont branchées électriquement en série de telle sorte que leurs cathodes sont reliées entre elles.

12. Onduleur de puissance à faibles pertes selon la revendication 11, dans lequel il est prévu comme convertisseur à grande puissance (T7 à T10) un commutateur semi-conducteur de puissance interruptible.

13. Onduleur de puissance à faibles pertes selon la revendication 1 ou 2, dans lequel il est prévu comme inductance à résonance (L_{R}) une bobine pouvant être saturée.

14. Onduleur de puissance à faibles pertes selon la revendication 3, dans lequel il est prévu comme commutateurs semi-conducteurs de puissance extérieurs (T₁ ou T₄) des demi-ponts supérieur ou inférieur (6 ou 8) un branchement série de deux commutateurs semi-conducteurs de puissance qui sont munis à chaque fois d'un condensateur à résonance parallèle.

15. Onduleur de puissance à faibles pertes selon la revendication 3, dans lequel il est prévu comme commutateurs semi-conducteurs de puissance extérieurs (T₁ ou T₄) des demi-ponts supérieur ou inférieur (6 ou 8) un branchement série de deux commutateurs semi-conducteurs de puissance qui sont munis d'un condensateur à résonance parallèle.

16. Onduleur de puissance à faibles pertes selon la revendication 1, dans lequel il est prévu comme diode de découplage (D5, D6) un branchement série de deux diodes qui sont munies à chaque fois d'un condensateur à résonance parallèle.
